# EUROPEAN PATENT APPLICATION

(11) **EP 3 633 235 A1**
(43) Date of publication of application: **08.04.2020**
(21) Application number: 18809158.1
(22) Date of filing: 01.06.2018
(51) Int. Cl.: F16H 39/00, F16H 39/04, F16H 39/06, F16H 39/22, F16H 39/24, F16H 39/26, F16H 39/28, F16H 39/30, F16H 39/32, F16H 39/34

(54) **POWER-TRANSMISSION AND/OR VARIABLE-SPEED DRIVE DEVICE**

(30) Priority: 02.06.2017 CL 20171405
(71) Applicant: BHT Technology SpA, 8320000 Santiago (CL)
(72) Inventor: BELMONTE ZBINDEN, Waldo, Codigo Postal 8320000 Santiago - Chile (CL)
(74) Representative: Manuel Illescas y Asociados, S.L.U.
(86) International application number: PCT/CL2018/000017
(87) International publication number: WO 2018/218379

(57) **Abstract**

The present invention relates to a power-transmission and/or variable-speed drive (CVHT) device or apparatus, the field of application being the mechanical area of industry, the purpose of the device or apparatus being to transmit power and vary speed in an output shaft continuously from zero up to a maximum speed and vice versa, regardless of the rotation speed of the drive motor shaft, whether the motor is of the electric, hybrid or internal combustion (diesel, gasoline) type or another type. Consequently, the device or apparatus can be used in any type of motorised vehicle, and industry equipment in general, that requires variable speed.

## Description

### Field of the invention

This invention, an utility model, such as mentioned above, is referred to power transmission and/or variable speed drive device or apparatus (CVHT).

Developed and designed in its operation to provide a suitable performance, independent of the input driving force, enabling to vary speed and torque in the output shaft, being these driving forces electric motors, hybrids, internal combustion (i.e. diesel, gasoline), etc., contributing to optimize process for most industries by having equipment able to modify operation speed, resulting for example, in energy savings.

### Description of prior art

Industrial machinery is generally electric motor driven at constant or variable speed, limited to narrow rates. However, most electric motor operates at constant or nearly constant speed with values depending on input energy and specific characteristics, not easy to modify.

In order to regulate motor speed, a special controller is used, known as variable frequency drive (VFD). VFD's are used for a wide range of industrial applications, such us blowers and conditioned air units, pumps, conveyor belts, elevators, lathes, milling machines, among others.

*A variator* may consist in the combination of an electric motor and its controller, used to regulate speed. By combining constant speed motor with a mechanical device enable to modify speed in a continuous way (not a stteper motor), also can be designated as a *variator.*

Due to its electronic nature, variable frequency drive (VFD) are fragile equipment, demanding special environmental conditions to operate.

Furthermore, VFD controllers used in mining industry need special conditioned rooms to operate, because of temperature stability requirements, around 18°C (+/-3 °C), allowing for instance, keeping isolated from typical contamination in mining areas.

Frequency variators (VFD) controls output speed of AC electric motors alternating input frequency of the same motor. Such electric motors are designed to operate at certain RPM or near its nominal speed, in particular, because this allows cooling system to partially evacuate the generated heat. If electric motors spent too much time in low RPM, temperature will rise and a forced ventilation system will be required for extracting heat.

Similarly, VFD's shows problems in high speed above nominal. The reason for this is founded in the lack of guarantees from manufacturers to speed ranges over nominal during periods of constant output power. In fact, auto-cooling produce an abrupt power drop as RPM increase, because of absorption of mechanical power by its own extractor fan, power that should be available for work.

Also, magnetic loss in the air gap are remarkable increased as frequency does. All these factors make not possible to work with conventional motors at speeds substantially higher than nominal.

Another problem linked to use of VFD's is the destruction of windings in standard electric motors. Harmonic's presence in the FVD power output are rich in higher frequencies, degrading windings in time, whose isolations are not prepared in long term for a permanent bombing of abrupt tension transitions.

The utility model enunciated as power transmission and/or variable speed drive device (CVHT) enables to change from cero to a maximum speed in continuous way without intervals, independently of RPM from motor drive, allowing to regulate the output speed. This means torque of drive motor multiplies many times as output speed of power transmission and/or variable speed-drive device (CVHT) is reduced, therefore, extremely high torques are obtained in the output shaft being this aspect decisive to overcome inertia at the moment of start equipment involving great forces and resistances. Taking this advantage into account, CVHT device is able to operate as a gearbox in extremely high transmission ratios, widely over 1000:1

Consequently, CVHT device in its design conception and functionality offers several advantages respect existing equipment or devices for same purpose, such as:
✔ Output angular speed of CVHT can be equal to cero, independently from speed of drive motor.
✔ Ability to work with motor powers from fractions HP to thousands HP regardless of angular speeds involved
✔ Adaptable to any task, geographic altitude, temperature or specific work condition, without requirements of intervention to drive motor or CHVT Variator
✔ Able to maintain output speed constant, with different angular speeds input.
✔ The ability to reverse rotational direction in output shaft respect rotational direction of drive shaft, keeping all features, but in opposite sense.
✔ The CVHT Variator requires low maintenance, due its simplicity of construction, few mobile pieces and operational principles involved.

Another positive operational feature from CVHT Variable Speed-Drive is the ability to replace some components of embodiments in power transmission and speed control platforms applied in productive processes, being this:
✔ Eliminates Gearboxes
✔ Eliminates variable frequency drive units
✔ Eliminates Soft Starter

As an example, the utility model Variable Speed-Drive CHVT operating with conveyor belts:
- The utility model Variable Speed-Drive CHVT operates as a continuous Variable Speed-Drive. In other words, delivers variable speed from cero to a maximum of designed speed and all speed specter in between. In practical terms, if a conveyor belt operates at 60 RPM and due to maintenance needs, load, momentary demands, etc., a speed reduction is required to 1 RPM or other intermediate point between 0 to 70 RPM (assuming this as a maximum design value), el U.M. Variable Speed-Drive CVHT operate in permanent mode if required, without any inconvenient for the electric motor.
- The utility model Variable Speed-Drive CHVT operates as a speed gearbox for the start point in a conveyor belt, moment where highest torque is required. The ability of the utility model Variable Speed-Drive CHVT for reducing speed in output shaft gets for that instant a multiplication many times as speed is reduced of torque delivered by the electric motor. In practical terms, assuming electric motor operating at 750RPM and conveyor belt speed at start point is 0.5 RPM, then the torque in that instant will be 1500 times the value of torque delivered by the electric motor. (Obtained from theoretical calculation 750 RPM / 0.5 RPM = 1500).
- Besides, the ability to limit automatically torque if necessary in determined moment o period.
- The utility model Variable Speed-Drive CHVT reduces energy consumption. In this case, the ability of the utility model Variable Speed-Drive CHVT to operate as a gearbox at the start moment possibilities the use of lower power electric motors because its selection is based on overcome inertia when conveyor belt is idle. Currently, when conveyor belt operates at optimal speed, electric energy is wasted by the electric motor delivering more power than required for that situation. With the utility model Variable Speed-Drive CHVT is possible to use electric motors approximately 20% less in power for an actual conveyor belt, resulting in less power consumption for the whole assembly and contributing to a better environment.
- Speed change in the utility model Variable Speed-Drive CHVT is instantaneous, responding immediately to control speed command requirements.
- The utility model Variable Speed-Drive CHVT enables "cero speed" with no need to stop electric motor drive, allowing safe maintenance in the conveyor belt, since is stopped.
- The utility model Variable Speed-Drive CHVT operates in any climatic conditions, without special rooms requirements. Also can work in different geographic altitudes.
- Able to maintain output speed constant, with different angular speeds input.
- The utility model Variable Speed-Drive CHVT has the ability to reverse rotational direction in output shaft respect rotational direction of drive shaft, keeping all features, but in opposite sense.
- The utility model Variable Speed-Drive CHVT offers the possibility of "neutral shift" as known in car gearboxes, releasing the conveyor belt for maintenance items or other requirements, no needing to stop the electric motor drive.
- The utility model Variable Speed-Drive CHVT goes mounted between the electric motor drive and the traction drum in the conveyor belt.

On the other hand, concerning about mechanical power transmission, we take references equipment and devices used in cars industry.

The follows developments are available:
I) Manual gearboxes is the power transmission system most used in present days, offering in its evolution more than seven relation ratios forward and one in reverse, complementing with a clutch system connecting engine power to gearbox. Driver must activate clutch pedal in order to put the vehicle in motion and shift the gears. The gearbox is assembled with three shafts (input, intermediate and output, gears, synchronizers and a command to shift from outside
II) Robotic Gearbox, characterized for a robotized system to shift and clutch the gearbox according with the user's needs or software according to engine RPM, cargo and driving conditions. This systems eliminates clutch pedal in driver's cabin, existing the alternative for controlling by paddle shifts in the steering wheel or gear lever.

In order to shifts the gears, robotic system actuates synchronously by incorporating a second clutch, allowing to increase the number of relationship ratios to seven. These gearboxes are used in top performances vehicles due to its elevated prices and sophistications.

III) The automatic gearbox with torque converter, a system that eliminates the clutch pedal. Instead of this, between engine and gearbox a torque converter is installed, actuating as a hydraulic clutch. Automatic gearbox works on the combination of a series of planetary gears which depending on its configuration, some parts situates in fixed position, the rest rotates and delivers a different output speeds. To activate different groups of planetary gears, series of disc clutches are set in the gearbox interior, as well as synchronizers. Shifting from gear to gear is achieved by a mechatronic system, previously programmed to shift at certain rpm and according to driving conditions at that moment.

At present, state of the art gearboxes delivers until nine speeds in the output shaft. The extreme sophistication of such system involves high manufacturing costs, therefore expensive prices at market. However, it is important to note that its efficiency is not as higher as manual shift gearboxes.

IV) Continuously variable transmission (CVT) gearbox, which consists in pulley - belt or chain -belt arrange depending on design. Basically consist of a torque converter, two pulleys, one connected to motor drive through torque converter and the other to the output shaft, with a belt placed between them. If the effective diameter of the pulley varies where the belt is placed, the output speed will be different to the input one. This system provides continuous speed from a specific speed equivalent to first gear to fifth or sixth in a manual shifted gearbox.

Regarding this, Variable Speed-Drive CHVT and/or Speed Variator device(CHVT) sets certain advantages and differences, being one of these power transmission at infinite speed in the output shaft, in forward or reverse direction. On the contrary, current car transmission systems compels to change engine's RPM in order to modify vehicle speed. Another benefit of use Variable Speed-Drive CHVT technology in car industry is reduction of fuel consumption, less contamination, improving advantages of motor qualities and lowering possible wear. Besides, it will contribute to develop smaller engines and vehicles, taking advantage of the operational efficiency (optimal RPM) delivered by use of Variable Speed-Drive CHVT technology, in comparison to vehicles equipped with conventional transmission systems.

The follow table presents a comparison between Variable Speed-Drive CHVT technology for gearboxes and conventional technologies available for the same purpose:

| **FEATURE** | **POWER TRANSMISSION TYPE** | | | | |
|---|---|---|---|---|---|
| | **CVHT** | **MT** | **DDCT** | **AT** | **CVT** |
| **Speed number** | Infinite forward and backward | 6 forwards 1 backward | 7 Forwards 1 backward | 9 Forwards 1 backward | In a given range infinite forwards 1 backward |
| **Clutch system required** | No | Yes | Yes, Robotic | Yes, torque converter type | Yes, multidisc or torque converter |
| **Gear requirements** | No | Yes | Yes | Yes, Planetary | No, Operates via Belt-Pulley or Chain-Pulley |
| **Manufacturing Costs** | Low | Medium | High | Very High | Very High |
| **Maintenance Costs** | Low | Medium | High | Very High | Very High |
| **Device size** | Small | Small to medium | Small to medium | Big | Big |
| **Application Range** | Wide (Machinery, motorbikes vehicles, ships) | Small vehicles to ships | Small to medium vehicles | Small to big vehicles | Small to medium vehicles |
| **HP in motor drive** | From fractions HP to thousands HP | From fractions HP to thousands HP | 150 - 400 | 80 - 400 | 80 - 300 |
| **Efficiency** | 0.95 | 0.95 | 0.95 | 0.90 | 0.90-0.95 |
| **Fuel Saving** | 20 - 40% Less than MT | Normal | Slightly less than MT | 10 - 20% superior to MT | Slightly less than MT |
| **Environment friendly** | Yes + | Yes | Yes | No | Yes |
| **Enables motor-brake** | Yes to Full Stop | Yes | Yes | No | Yes |

Where Power Transmissions types are:

### CVHT Device o Apparatus

- **MT:**: Manual Shifted Gearbox
- **DDCT:**: Dual Dry Clutch Robotic Transmission
- **AT:**: Automatic Transmission
- **CVT:**: Continuous Variable Transmission

### DETAILED DESCRIPTION OF INVENTION

The present invention, taking into consideration that is an Utility Model, is introduced as a power transmission and/or or variable speed drive device or apparatus (CVHT), which in its structural design and components configuration, enables to connect to any kind of motor drive, delivering variable speed and torque in the output shaft. It consists of a housing (1), a front cover (2) and rear cover (3), shaping a proper and functional niche to accommodate inside parts and pieces, and a hydraulic variable-flow pump (4) and hydraulic motor (5). At its front side, input shaft is showed (6), being this a connection point from a power source that delivers to the device through a splined shaft. The other end of the shaft is integral with the rotor pump (7), which incorporates 10 sliding blades from the pump (8). It has been planned when the shaft transfers power from the motor source to the pump, according with requirements or needs, flow is regulated through a flow controller actuated by a worm hand crank (9), which moves a rack carved in the outside face of the eccentric ring of the pump (10) concentrically to the central shaft of surface of the inner circumference of the housing (1) which enables the pump to propel a determined fluids flow defined according with the ring position (10) in a specific time.

Flows is propelled and forced to go from the pump through a fluid flow communicating cavity side A (A1) towards the admission of the hydraulic motor (5) due is kept inside housing (1), covers (2) and (3) the dovetail pieces in frontal cover (11), dovetail in rear cover (13) and dovetail central (12), all of them extended until make contact with the inner surface of the housing (1) adding to this the containment produced by blades of the hydraulic variable-flow pump (8) and the blades of the hydraulic motor (15) when moving from side A to side B or vice versa while go through the cavity generated in the corresponding dovetails, plus pump rotor (7) and hydraulic motor rotor (16), shaping a cavity that prevents fluids moving from side A to side B or vice versa.

When flow sent by the pump is forced to go to the hydraulic motor (5) this one is able to convert available hydraulic energy in power which is transferred to output shaft (14) through the sliding blades of the hydraulic motor (15), hydraulic motor rotor (16) and the eccentric ring of hydraulic motor (24) respectively, allowing to obtain different speeds in the output shaft (14) according to the to the flow sent by hydraulic pump (4). In this way, a recirculating effect is produced over the fluid at inner part of the housing, forcing fluid to move from the exit of hydraulic motor through the communicating cavity Side B (B1) towards pump admission (4) since it can't go outside because is confined inside housing (1), covers (2), (3), dovetail pieces in front cover (11), dovetail in rear cover (13) and central dovetail (12) all of them extended until touching with the inner surface of housing (1), adding to that contention produced by hydraulic variable-flow pump blades (8) and hydraulic motor blades (15) when moving from Side B to Side A or vice versa, while go through the cavity generated in the respective dovetails, plus rotor pump (7) and hydraulic motor rotor (16), shaping a cavity that prevents fluid from moving Side B to Side A and vice versa.

When variable-flow hydraulic pump does not deliver fluid flow, the output shaft does not transmit power. If output shaft (14) begins to rotate faster than expected for a specific flow in the pump, in that instant the hydraulic motor (5) start to propel fluid as a hydraulic pump, therefore the excess fluid in the admission zone in the hydraulic pump turns that pump into a hydraulic motor, forcing it to rotate faster, moving power to the input shaft, which force the drive motor (for instance, an internal combustion engine) to raise RPM in that moment. This make possible in such events, a motor-brake effect, similar to the vehicles with manual gearbox. Difference is established by this power transmission system because the input shaft and the output one are constantly connected through the fluid, meaning that the vehicle, machinery or equipment could brake from a maximum speed to cero using fluid flow control of the variable-flow hydraulic pump (4).

The input power shaft (6) and the output shaft (14) are mounted over bearings and/or bushing (18) supported both in front (2) and (3) rear covers and over the central dovetail (12). In this case, the input power shaft (6) and the output shaft are co-linear, which facilitate manufacturing of the device and reducing its size.

Three dovetail (11), (12), (13) are kept fixed in its position respect housing (1), independently of input and output shaft speeds.

The shaft of the worn hand crank (9) is supported on bearings or bushings. Shafts (6) and (14) and the worn hand crank assembly (9) have retainers and/or hydraulic seals (19) used to prevents the fluid leaks and entry of foreign particles.

To isolate bearings (17) and retainers (19) from external environment, a cover is placed over pump bearing (20) and a cover over hydraulic motor bearing (21), situated concentrically over corresponding shafts.

Whether the system is used as a power transmission or speed variator, housing can be manufactured with different types of couplings to other devices or machines to work with, such us a shaped bell in the front part of this device(22), a pedestal (23) in lower section, or another system to simplify its installation or any form to assure its position.

To entry fluid into CHVT device, a screw plug of hydraulic fluid supply (25) is placed in the upper section of the housing (1) and a drain screw plug of hydraulic fluid (26) in the lower section of said device.

### Drawing Description

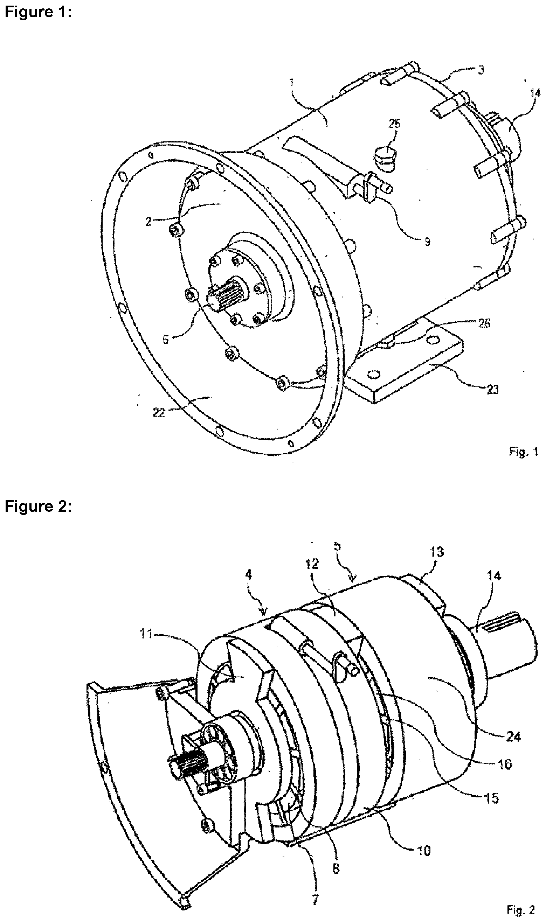

Figure 1: Power transmission and/or variable speed drive device (CVHT), isometric view.
Figure 2: Perspective View: A housing and bearing caps section is shown, with inside components intact.

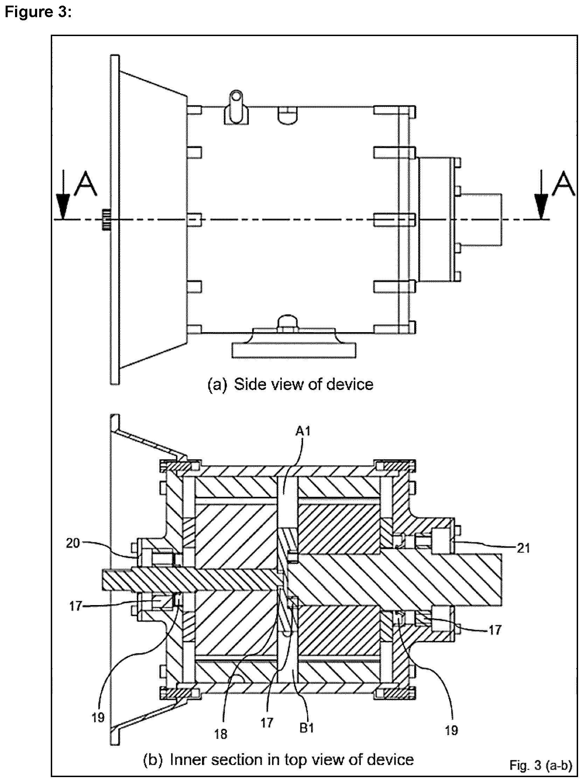

Figure 3 (a-b): (a) Side view of device. (b) Inner section in top view of device.

## Claims

1. Power transmission and/or variable speed drive device or apparatus CVHT, which in its design and embodiment enables to connect in its input shaft a motor drive with speed and torque variable or constant, transmitting power at infinite speeds, whether forwards or backwards in its output shaft. This unity, being its application field in the mechanic area of the industry is **characterized by** a circular housing (1) a front cover (2) a rear cover (3) a variable- flow hydraulic pump (4) and one or several hydraulic motors (5) a splined shaft (6) that connects to a drive force which delivers power to the apparatus or device; A worn hand crank (9) to controls the fluids flow delivered by the pump moving a carved rack, placed on the outer face of the eccentric ring of the pump (10); a central piece of dovetail (12) separating hydraulic pump (4) and hydraulic motor (5) with an angle between divergent walls equivalent to the angle between two consecutives blades of the pump (8); two communications cavities of the fluid (A1) y (B1), both in opposites sides; a dovetail in front cover (11) that separate rotor (7) belonging to the pump (4) from the inner wall in the corresponding cover; a dovetail piece of the rear cover (13) that separates rotor (16) from the belonging to the hydraulic motor (5) of the interior wall from the corresponding cover; an output shaft with keyway (14) that transmits power from hydraulic motor (5) to the exterior; a rotor from hydraulic motor (16); a sliding blades (15) placed on the corresponding slots of rotor in hydraulic motor (16); Bearings (17) to provide support to the input and output shaft; Bushings (18) to provide support to the input (6) and output (14) shafts on the central dovetail (12); An eccentric ring of the hydraulic motor (24) similar to the designed one for the hydraulic pump (4) that remains in fixed position; Retainers and hydraulics seals (19) to assure hydraulic tightness of power transmission. Bearings covers of the variable-flow hydraulic pump (20) and the hydraulic motor (21) that separates bearings (17) and retainers (19) zone from exterior, allowing to maintain free from outside contamination; A bell shaped flange (22) that's connect and assure housing (1) of the power transmission to the structure of the delivering power device; A pedestal (23) to fix the housing (1) of the dispositive or apparatus to a base and a screw plug (25) in the upper part of the housing (1) to supply hydraulic fluid and a screw plug (26) to drain it in the lower part of it.

2. Power transmission and/or variable speed drive device or apparatus CVHT, according to claim 1, CHARACTERIZED because comprising an oval, circular housing or another geometric shape based on design (1) coupling a front cover (2) and a rear cover (3) that adapts to the housing shape, forming a closed niche, which allows to place parts and pieces a variable-flow hydraulic pump (4) and one or several hydraulic motors (5) with corresponding input shafts (6) and output shaft (14) at inner part of said device. Power transmission and/or variable speed drive device or apparatus CVHT.

3. Power transmission and/or variable speed drive device or apparatus CVHT, according to claim 1 and 2, CHARACTERIZED because comprising co-linear parallels shafts or no co-linear of the hydraulic pump (4) and hydraulic motor (5), enabling physics design of the housing (1) may adapt to the available space where this device is required.

4. Power transmission and/or variable speed drive device or apparatus CVHT, according to claim 1 and 2, CHARACTERIZED because comprising variable-flow hydraulic pump shaft (4) and hydraulic motor (5) shaft perpendiculars or in different from cero angles in any direction.

5. Power transmission and/or variable speed drive device or apparatus CVHT, according to claim 1 and 2, CHARACTERIZED because comprising a splined shaft (6) placed at front part, enabling to connect to a drive source that delivers power to said device or apparatus.

6. Power transmission and/or variable speed drive device or apparatus CVHT, according to claim 1 and 2, comprising a splined shaft (6) placed at front part, integral with the rotor pump (7) that incorporates ten sliding blades of the pump (8).

7. Power transmission and/or variable speed drive device or apparatus CVHT, according to claim 1 and 2, CHARACTERIZED because comprising a worn hand crank (9) placed on the external face of the housing (1) which allows to regulate fluid flow delivered for the pump according to need or requirement.

8. Power transmission and/or variable speed drive device or apparatus CVHT, according to claim 1 and 2, CHARACTERIZED because comprising a carved rack, placed on the outer face of the eccentric ring of the pump (10) which rotates concentric to the central shaft of the circumference of the inner surface of housing (1), allowing the pump propels a determined fluid flow corresponding to the ring position (10) for a specific time.

9. Power transmission and/or variable speed drive device or apparatus CVHT, according to claim 1 and 2, CHARACTERIZED because comprising a central dovetail piece, shaped by two opposite dovetails (12) which permits to separate the hydraulic pump (4) from one or more hydraulics motors (5) with an angle between divergent walls equivalent to the angle between two consecutives blades, forming two cavities of fluid communication (A1) y (B1), on side A and B respectively.

10. Power transmission and/or variable speed drive device or apparatus CVHT, according to claim 1 and 2 CHARACTERIZED because it comprises a central piece of dovetail on the front cover (11), similar in geometry to the central dovetail, which allows to separate rotor (7) of the pump from the inner wall of the corresponding cover (12), performing same function of said piece.

11. Said device of claim 1 and 2 comprising a dovetail on the rear cover (13) similar in geometry to the central dovetail, which allows to separate rotor (7) of the pump from the inner wall of the corresponding cover (12) performing same function of said piece.

12. Power transmission and/or variable speed drive device or apparatus CVHT, according to claim 1 and 2, CHARACTERIZED because comprising an output shaft with keyway (14) which allows to transmit power from hydraulic motor (5) to outside.

13. Said device of claim 1 and 2, CHARACTERIZED because comprising blades or sliding elements (15) placed on the corresponding rotor slots of the hydraulic motor (16), which allows to transmit power to the output shaft (14).

14. Said device of claim 1 and 2 comprising bearings (17) to support input and output shafts.

15. Power transmission and/or variable speed drive device or apparatus CVHT, according to claim 1 and 2, CHARACTERIZED because comprising bushings (18) to support the ends of the input (6) and output (14) shafts on the central dovetail (12).

16. Said device of claim 1 and 2 comprising retainers and hydraulics seals (19) to assure hydraulic tightness of power transmission.

17. Power transmission and/or variable speed drive device or apparatus CVHT, according to claim 1 and 2, CHARACTERIZED because comprising bearings covers of the variable-flow hydraulic pump (20) and the hydraulic motor (21) placed concentrically to its corresponding shafts, that separates bearings (17) and retainers (19) zone from exterior, allowing to maintain free from outside contamination.

18. Said device of claim 1 and 2 comprising a bell shaped flange (22) to connect and assure housing (1) of the power transmission to the structure of the delivering power device.

19. Said device of claim 1 and 2 comprising a pedestal (23) to fix the housing (1) of the dispositive or apparatus to a static surface.

20. Power transmission and/or variable speed drive device or apparatus CVHT, according to claim 1 and 2, CHARACTERIZED because comprising an eccentric ring of the hydraulic motor (24) similar in design to the eccentric ring of the pump (10) that remains in fixed position which allows to the hydraulic motor (15) blades that go through the zone delimited by one of the dovetails, to have a greater area able to receive or propel fluid flow.

21. Said device of claim 1 and 2 comprising a input screw plug (25) and a output screw plug (26) integrated on the housing (1) to supply and drain hydraulic fluid from the housing (1), respectively.
